# EUROPÄISCHE PATENTSCHRIFT

(11) **EP 2 286 651 B1**
(45) Veröffentlichungstag und Bekanntmachung des Hinweises auf die Patenterteilung: **28.11.2012**
(21) Anmeldenummer: 10401120.0
(22) Anmeldetag: 22.07.2010
(51) Int. Cl.: A01C 15/00

(54) **Vorratsbehälter einer pneumatischen Verteilmaschine**
Hopper of a pneumatic seed drill
Réservoir d'une semoir pneumatique

(30) Priorität: 05.08.2009 DE 102009026331
(43) Veröffentlichungstag der Anmeldung: 23.02.2011
(73) Patentinhaber: Amazonen-Werke H. Dreyer GmbH & Co. KG, 49205 Hasbergen (DE)
(72) Erfinder: Pokriefke, Michael, 27798 Hude (DE); Schröder, Olaf, 27798 Hude (DE); van Zoest, Ralf, 46767 Twist (DE)

(56) Entgegenhaltungen:
- EP-A1- 2 014 147
- FR-A1- 2 546 027
- US-A1- 2007 256 894

## Beschreibung

Die Erfindung betrifft einen mit einem unter Luftüberdruck setzbaren Vorratsbehälter einer landwirtschaftlichen Verteilmaschine gemäß des Oberbegriffes des Patentanspruches 1.

Derartige landwirtschaftliche Verteilmaschinen sind beispielsweise durch die US 71 56 029 B2 bekannt. Diese Vorratsbehälter weisen auf ihrer Oberseite ein oder mehrere relativ kleine mit einem Deckelelement verschließbare Vorratsbehälter auf. Diese Vorratsbehälter sind über das Dosierdrucksystem unter Druck zu setzen. Das Befüllen dieser Vorratsbehälter ist relativ ungünstig, weil nur über die kleinen Einfüllöffnungen Material in den Vorratsbehälter eingefüllt werden kann. Weiterhin kann das Volumen des Vorratsbehälter nur relativ klein sein, weil der obere Bereich des Vorratsbehälters an den Schüttwinkel des sich im Vorratsbehälter eingefüllten Materials angepasst ausgestaltet ist.

Durch die EP 20 52 595 A1 ist eine aus einer Düngerausbringmaschine und einer Einzelkornsämaschine bestehende Verteilmaschine bekannt. Den Vorratsbehälter der Düngerverteilmaschine ist ein als Unterdruckdosiersystem ausgebildeter Dosierer zugeordnet. Der Vorratsbehälter wird nicht unter Druck gesetzt. Der Vorratsbehälter weist eine Einfüllöffnung auf, die quasi der kompletten Querschnittsform des Vorratsbehälters in seinem größten Aufnahmebereich entspricht. Ein derartiger Vorratsbehälter ist über diese grosse Einfüllöffnungen einfacher Weise zu befüllen.

Weiterhin ist aus EP2014147 A1 ein mit unter einem Luftüberdruck setzbarer Vorratsbehälter einer landwirtschaftlichen Verteilmaschine bekannt, wobei der Vorratsbehälter in seinem oberen Bereich zumindest eine Einfüllöffnung aufweist, wobei die Einfüllöffnung durch zumindest ein Deckelelement druckdicht verschließbar ist, wobei das Deckelelement ein die Einfüllöffnung übergreifendes Rahmenelement aufweist und das Rahmenelement mit einem planenartigen und die Einfüllöffnung abdichtend zusammenwirkenden Abdeckmittel versehen ist und wobei das planenartige Abdeckmittel in bespannter Weise an dem Rahmenelement angeordnet ist.

Des Weiteren weist die Verteilmaschine relativ kleine Vorratsbehälter für die Einzelkornsämaschine auf. Diese Einfüllöffnungen sind jeweils mit einem Deckelelement verschlossen.

Der Erfindung liegt die Aufgabe zugrunde, mit einfachen Mitteln zumindest eine große Einfüllöffnung aufweisende Vorratsbehälter mit einem leicht gebautem und einfach herzustellendem Deckelement druckdicht zu verschließen.

Diese Aufgabe wird erfindungsgemäß durch die kennzeichnenden Merkmale des Anspruches 1 gelöst. Infolge dieser Maßnahmen wird ein sehr leichtes Deckelelement geschaffen, weil das Abdeckmittel als planartiges Element ausgestaltet und somit sehr leicht ist. Auch das Rahmenelement, welches das planartige Abdeckmittel trägt kann sehr leicht in Leichtbauweise ausgestaltet sein.

Weiterhin wird eine einfache Anordnung und Befestigung des planartigen Abdeckmittels an dem Rahmenelement verwirklicht.

Dadurch, dass das planenartige Abdeckmittel auf der der Einfüllöffnung zugewandten Seite des Rahmenelementes die Einfüllöffnung in abdeckender Weise angeordnet ist, kann mit relativ wenig planartigen Abdeckmitteln die Öffnung einfach abgedeckt werden.

Um eine gute Abdichtung zwischen dem planartigen Abdeckmittel und der Wandung des Vorratsbehälters erreichen zu können, ist vorgesehen, dass an dem planenartigen Abdeckmittel ein umlaufendes Dichtlippenelement, welches der Kontur der Einfüllöffnung zumindest annähernd entspricht und mit dem die Einfüllöffnung umfassenden Wandelementen des Vorratsbehälters zusammenwirkt, angeordnet ist. Infolge dieser Maßnahme befindet sich das Dichtelement am Deckelement, so dass es bei Befüllen des Vorratsbehälters durch die Einfüllöffnung nicht beschädigt werden kann.

Eine vorteilhafte Ausgestaltung der Einfüllöffnung, um eine möglichst große Einfüllöffnung zu verwirklichen, ist vorgesehen, dass die Größe und Form der Einfüllöffnung zumindest annähernd der Größe und Querschnittsform des Vorratsbehälters in seinem oberen Bereich entspricht.

Weitere Einzelheiten der Erfindung sind den übrigen Unteransprüchen, der Beispielsbeschreibung und den Zeichnungen zu entnehmen. Hierbei zeigen
- Fig. 1: den Vorratsbehälter einer landwirtschaftlichen Verteilmaschine mit in Öffnungsstellung sich befindlichen Deckelelementen in perspektivischer Darstellung,
- Fig. 2: den Vorratsbehälter gemäß Fig. 1 in einer anderen perspektivischen Darstellung,
- Fig. 3: das Deckelelement in perspektivischer Darstellung in der Ansicht von schräg-oben,
- Fig. 4: das Deckelelement in gleicher Darstellungsweise wie in Fig. 3, jedoch mit dem Unterschied, dass das planartige Abdeckmittel grau schattiert an dem Rahmen dargestellt ist und
- Fig. 5: den Vorratsbehälter mit aufgestelltem Deckelement in perspektivischer Darstellung gemäß Fig. 1,

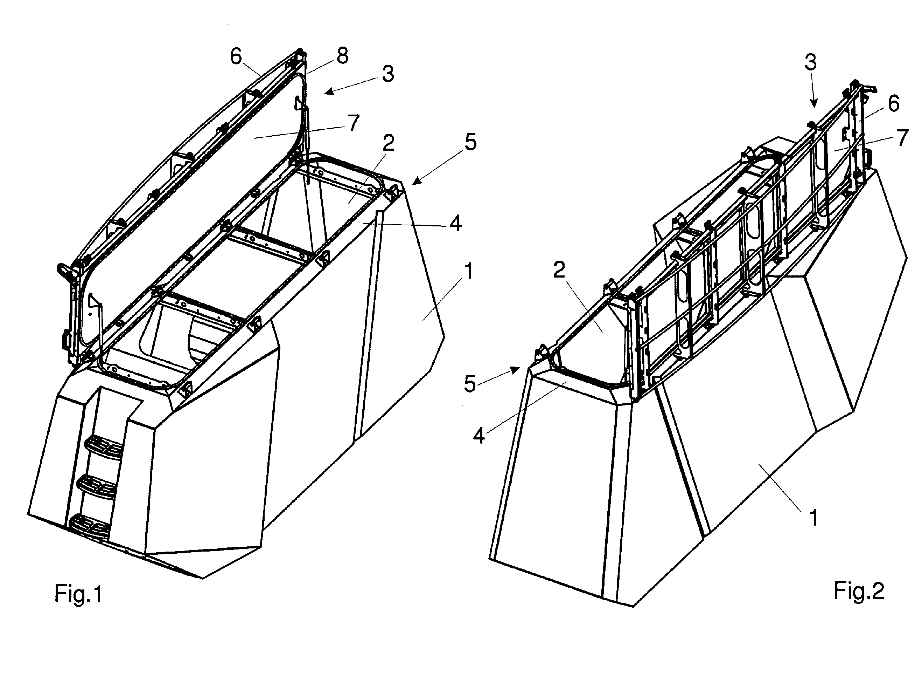

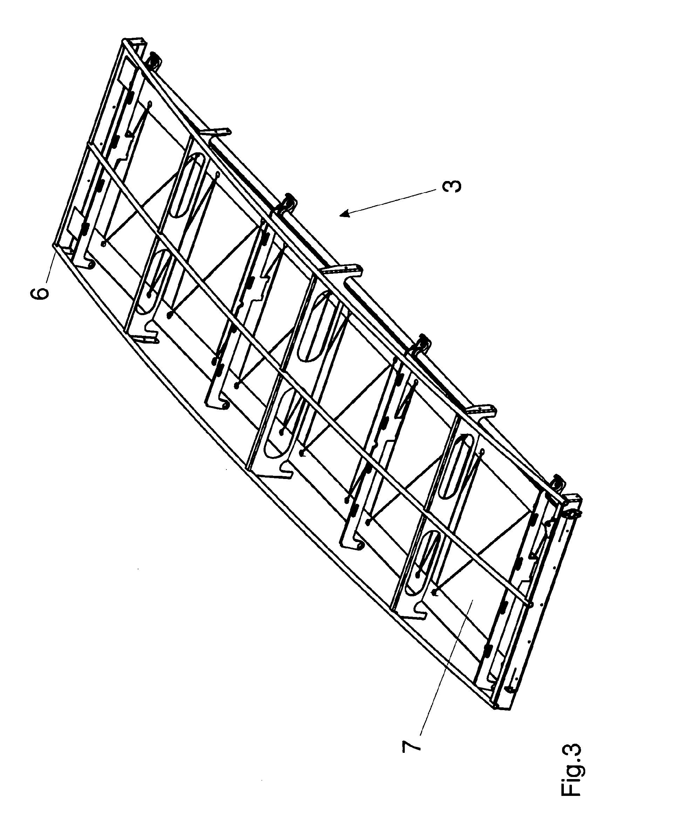

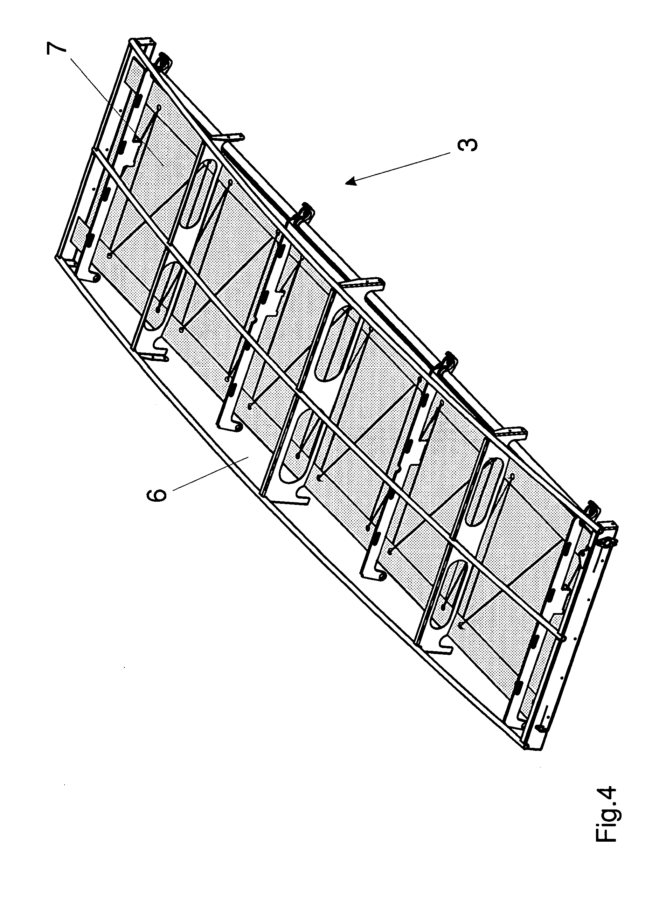

Der Vorratsbehälter 1 gemäß den Fig. 1 und 2 mit dem Deckelelement der Fig. 3 und 4 ist für eine pneumatische Verteilmaschine, beispielsweise Sämaschine oder Düngerstreuer mit einem pneumatischen Druckdosiersystem vorgesehen. Bei einem derartigen Druckdosiersystem wird der Vorratsbehälter 1 mit einem Luftüberdruck gegenüber dem Atmosphärendruck beaufschlagt. Hierzu muss die Einfüllöffnung 2 des Vorratsbehälters 1 mit einem Deckelelement 3 druckdicht verschlossen werden.

Die Einfüllöffnung 2 ist im oberen Bereich des Vorratsbehälters 1, im Ausführungsbeispiel in der oberen Vorratsbehälterwand 4, angeordnet. Hierbei weist die Einfüllöffnung 2 eine Größe und Form auf, die zumindest annähernd der Größe und Querschnittsform des Vorratsbehälters 1 in seinem oberen Bereich 5 entspricht, wie beispielsweise der Fig. 1 zu entnehmen ist.

Das Deckelelement 3 weist ein Rahmenelement 6 in Leichtbauweise auf, wie die Fig. 2 bis 4 zeigen. Dieses Rahmenelement 6 übergreift die Einfüllöffnung 2. Das Rahmenelement 6 ist mit einem planartigen und die Einfüllöffnung 2 abdichtend zusammenwirkenden planartigen Abdeckmittel 7 versehen. Im Ausführungsbeispiel ist als planartiges Abdeckmittel eine reißfeste luftdichte Plane 7 vorgesehen. Das planartige Abdeckmittel 7 ist über das Rahmenelement 6 gespannt, so dass das planartige Abdeckmittel 7 in bespannter Weise an dem Rahmenelement 6 angeordnet ist, wie die Fig. 1 bis 4 zeigen. Hierbei ist in Fig. 4 das planartige Abdeckmittel 7 in grau schattierter Weise zur besseren Darstellung in Vergleich zu Fig. 3 dargestellt.

Gemäß den Fig. 1 bis 4 ist das planartige Abdeckmittel 7 auf der der Einfüllöffnung 2 zugewandte Seite des Rahmenelementes 6 in abdeckender Weise angeordnet.

An dem planartigen Abdeckmittel 7 ist das umlaufende Dichtlippenelement 8, welches der Kontur der Einfüllöffnung 2 entspricht angeordnet. Das Dichtlippenelement 8 wirkt mit dem die Einfüllöffnung 2 umfassenden Wandelement 4 des Vorratsbehälters 1 zusammen. Das Dichtelement 8 ist in der Weise angeordnet, dass es der Kontur der Einfüllöffnung 2 entspricht und dem mit planartigen Abdeckmittel 7 und dem Wendeelement 4 in abdichtender Weise zusammenwirkt, wenn das Deckelement 3 auf die Einfüllöffnung 2 abdeckt. Das Deckelelement 3 wird in der Verschlussstellung in geeigneter Weise mit dem Vorratsbehälter 1 verriegelt.

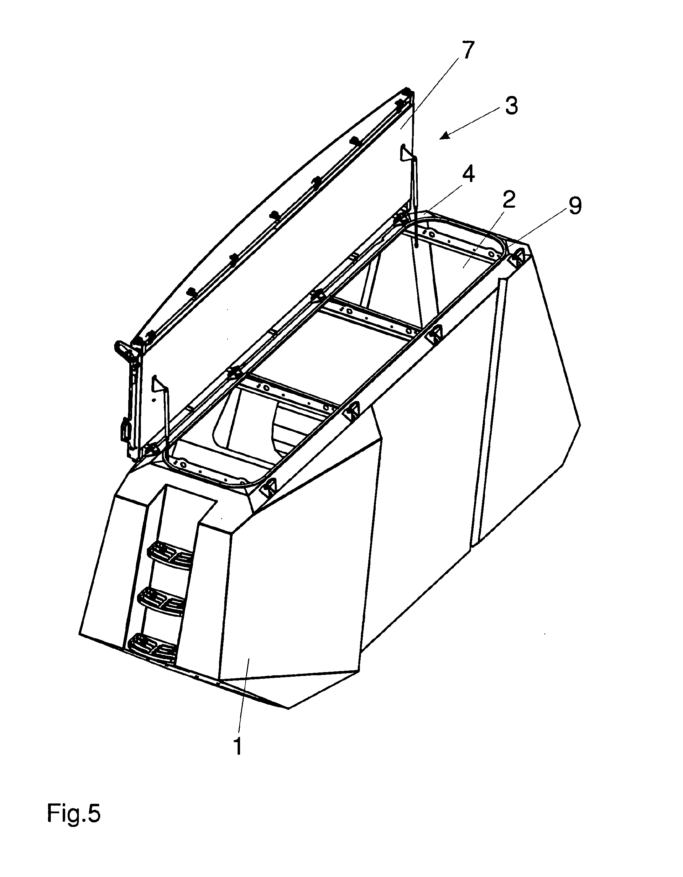

Das Ausführungsbeispiel gemäß Fig. 5 unterscheidet sich von dem Vorratsbehälter 1 und zugeordneten Deckelelement 3 gemäß den Fig. 1 bis 4 dadurch, dass das Dichtlippenelement 9 nicht an dem Deckelement 2 bzw. dem planartigen Abdeckmittel 7, sondern im Bereich der Einfüllöffnung 2 an den Wandungen 4 des Vorratsbehälters 1 angeordnet ist. Das Dichtlippenelement 9 ist entsprechend der Kontur der Einfüllöffnung 2 dieser zugeordnet. Das Dichtlippenelement 9 wirkt mit dem planartigen Abdeckmittel 7 in geschlossener Position des Deckelementes 3 in abdichtender Weise zusammen. Auch dieses Deckelelement 3 wird mittels geeigneter Verriegelungsmittel in Schließposition des Deckelelementes 3, um die Einfüllöffnung sicher zu verschließen, mit dem Vorratsbehälter 1 verriegelt.

In nicht dargestellter Weise ist es auch möglich, das planartige Abdeckmittel 7 so anzuordnen, dass es auf der der Einfüllöffnung abgewandten Seite des Rahmenelementes 6 in abdeckender Weise angeordnet ist. Hierbei werden die Ränder der Plane um das Rahmenelement 6 so herumgezogen, dass sie mit dem Wendeelementen 5 des Vorratsbehälters 1 abdichtend zusammenwirkten

## Patentansprüche

1. Mit unter einem Luftüberdruck setzbarer Vorratsbehälter (1) einer landwirtschaftlichen Verteilmaschine, wobei der Vorratsbehälter (1) in seinem oberen Bereich zumindest eine Einfüllöffnung (2) aufweist, wobei die Einfüllöffnung (12) durch zumindest ein Deckelelement (3) zumindest annähernd druckdicht verschließbar ist wobei das Deckelelement (3) ein die Einfüllöffnung (2) übergreifendes Rahmenelement (6) aufweist, das Rahmenelement (6) mit einem planenartigen und die Einfüllöffnung (2) abdichtend zusammenwirkenden Abdeckmittel (7) versehen ist und das planenartige Abdeckmittel (7) in bespannter Weise an dem Rahmenelement (6) angeordnet ist, **dadurch gekennzeichnet dass** das planenartige Abdeckmittel (7) auf der der Einfüllöffnung (2) zugewandten Seite des Rahmenelementes (6) in abdeckender Weise angeordnet ist.

2. Vorratsbehälter nach Anspruch 1, **dadurch gekennzeichnet, dass** an dem planenartigen Abdeckmittel (7) ein umlaufendes Dichtlippenelement (8), welches der Kontur der Einfüllöffnung (2) zumindest annähernd entspricht und mit dem die Einfüllöffnung (2) umfassenden Wandelementen (4) des Vorratsbehälters (1) zusammenwirkt, angeordnet ist.

3. Vorratsbehälter nach Anspruch 1, **dadurch gekennzeichnet, dass** in dem Bereich der Einfüllöffnung (2) an den Wandungen (4) des Vorratsbehälters (1) ein umlaufendes Dichtlippenelement (9), welches der Kontur der Einfüllöffnung (2) zumindest annähernd entspricht und mit dem planenartigen Abdeckmittel (7) zusammenwirkt, angeordnet ist.

4. Vorratsbehälter nach einem oder mehreren der vorstehenden Ansprüche, **dadurch gekennzeichnet, dass** die Größe und Form der Einfüllöffnung (2) zumindest annähernd der Größe und Querschnittsform des Vorratsbehälters (1) in seinem oberen Bereich (5) entspricht.

## Claims

1. Hopper (1), which is exposable to superatmospheric pressure, of an agricultural distributing machine, wherein the upper region of the hopper (1) has at least one pour-in opening (2), wherein the pour-in opening (2) is closable in an at least approximately pressure-tight manner by at least one cover element (3), wherein the cover element (3) has a frame element (6) which engages over the pour-in opening (2), the frame element (6) is provided with a tarpaulin-like covering means (7) interacting in a sealing manner with the pour-in opening (2), and the tarpaulin-like covering means (7) is arranged in a stretched manner on the frame element (6), **characterized in that** the tarpaulin-like covering means (7) is arranged in a covering manner on that side of the frame element (6) which faces the pour-in opening (2).

2. Hopper according to Claim 1, **characterized in that** an encircling sealing lip element (8) which at least approximately corresponds to the contour of the pour-in opening (2) and interacts with the wall elements (4), which surrounds the pour-in opening (2), of the hopper (1) is arranged on the tarpaulin-like covering means (7).

3. Hopper according to Claim 1, **characterized in that** an encircling sealing lip element (9) which at least approximately corresponds to the contour of the pour-in opening (2) and interacts with the tarpaulin-like covering means (7) is arranged on the walls (4) of the hopper (1) in the region of the pour-in opening (2).

4. Hopper according to one or more of the preceding claims, **characterized in that** the shape and size of the pour-in opening (2) at least approximately correspond to the size and cross-sectional form of the upper region (5) of the hopper (1).

## Revendications

1. Réservoir (1) pouvant être soumis à une surpression d'air pour une machine distributrice agricole, le réservoir (1) comprenant au moins une ouverture de remplissage (2) dans sa région supérieure, l'ouverture de remplissage (2) pouvant être fermée de manière au moins approximativement étanche à la pression par au moins un élément couvercle (3), l'élément couvercle (3) comprenant un élément cadre (6) recouvrant l'ouverture de remplissage (2), l'élément cadre (6) étant pourvu d'un moyen de recouvrement (7) de type bâche coopérant de manière étanche avec l'ouverture de remplissage (2) et le moyen de recouvrement de type bâche (7) étant disposé sur l'élément cadre (6) de manière à le revêtir, **caractérisé en ce que** le moyen de recouvrement de type bâche (7) est disposé sur le côté de l'élément cadre (6) tourné vers l'ouverture de remplissage (2) de manière à le recouvrir.

2. Réservoir selon la revendication 1, **caractérisé en ce qu'**un élément lèvre d'étanchéité périphérique (8) est disposé sur le moyen de recouvrement de type bâche (7), lequel élément lèvre d'étanchéité correspond au moins approximativement au contour de l'ouverture de remplissage (2) et coopère avec les éléments de paroi (4) du réservoir (1) entourant l'ouverture de remplissage (2).

3. Réservoir selon la revendication 1, **caractérisé en ce qu'**un élément lèvre d'étanchéité périphérique (9) est disposé sur les parois (4) du réservoir (1) dans la région de l'ouverture de remplissage (2), lequel élément lèvre d'étanchéité correspond au moins approximativement au contour de l'ouverture de remplissage (2) et coopère avec le moyen de recouvrement de type bâche (7).

4. Réservoir selon l'une quelconque ou plusieurs des revendications précédentes, **caractérisé en ce que** la taille et la forme de l'ouverture de remplissage (2) correspondent au moins approximativement à la taille et à la forme en section transversale du réservoir (1) dans sa région supérieure (5).
